# EUROPÄISCHE PATENTSCHRIFT

(11) **EP 0 467 129 B1**
(45) Veröffentlichungstag und Bekanntmachung des Hinweises auf die Patenterteilung: **30.08.1995**
(21) Anmeldenummer: 91110704.3
(22) Anmeldetag: 28.06.1991
(51) Int. Cl.: B29C 45/16

(54) **Düse für Spritzgiessmaschinen**
Nozzle for injection moulding machines
Buse pour machines à mouler par injection

(30) Priorität: 16.07.1990 DE 4022530
(43) Veröffentlichungstag der Anmeldung: 22.01.1992
(73) Patentinhaber: Klöckner Desma GmbH, 47057 Duisburg (DE)
(72) Erfinder: Eder, Erich, W-6078 Neu-Isenburg (DE); Kranitz, Josef, W-6369 Schöneck 1 (DE)
(74) Vertreter: Röther, Peter, Dipl.-Phys.

(56) Entgegenhaltungen:
- AT-B- 391 294
- FR-A- 2 217 147
- FR-A- 2 631 883
- GB-A- 1 369 744

## Beschreibung

Die Erfindung betrifft eine Düse für Spritzgießmaschinen gemäß den Merkmalen des Oberbegriffs des Patentanspruchs 1. Eine solche Düse ist z. B. aus der FR-A-2 631 883 oder GB-A-1 369 744 bekannt.

Derartige Düsen dienen entweder der Herstellung von mehrfarbigen spritzgegossenen Kunststoffartikeln, bei denen je nach Verfahrensführung mehr oder Weniger stetige Übergänge von einer zur nächsten Farbe gewünscht sind, oder der Herstellung von spritzgegossenen Kunststoffartikeln mit einer oder mehreren - preiswerten - Kernschicht(en) und einer - teureren - attraktiven Oberflächenschicht. Ihre Entwicklung setzte bereits vor längerer Zeit ein und fand ihren Niederschlag beispielsweise in der FR-PS 1 290 262, der DE-PS 23 42 789, der DE-PS 23 46 135 und der DE-PS 24 45 112. In diesen Fällen werden die verschiedenen Kanäle innerhalb jeder Düse zumindest auf dem letzten Stück ihres Weges zum gemeinsamen Düsenausgang koaxial geführt, wobei die separaten Absperrorgane für jeden Kanal entweder vor dem Erreichen der koaxialen Kanalführung in jedem Kanal angeordnet sind oder durch die beweglich ausgebildeten koaxialen Kanalführungselemente selbst gebildet werden. Diese bekannten Konstruktionen erlauben eine sehr kompakte Bauweise der in Rede stehenden Düsen, bedingen jedoch gerade wegen der gewünschten Kompaktheit auf der einen Seite und der durch die Abmessungen der Plastifiziereinheiten vorgegebenen Mindestabstände der Düseneingänge auf der anderen Seite, daß die Kanäle innerhalb einer Düse nur in Ausnahmefällen ohne erhebliche Abknickungen geführt werden können.

Dasselbe gilt auch für Düsenanordnungen wie diejenigen, die in der GB-A-1 369 744 oder in der FR-A-2 631 883 beschrieben sind, bei denen die einzelnen Kanäle innerhalb der gesamten Düsenanordnung bis in den jeweiligen Ausgangsbereich separat verlaufen und bereits vor dem Erreichen dieses Ausgangsbereiches jeweils mit einem unabhängig betätigbaren Absperrorgan in Form eines Schiebers bzw. eines Nadelventils versehen sind. Dabei zeigt die GB-A-1 369 744 eine in Fließrichtung der Kunststoffschmelzen sehr kurz bauende Düse, die von zwei parallel angeordneten Plastifiziereinheiten an zwei in entsprechendem Abstand angeordneten Düseneingängen mit plastifizierten Kunststoffen beaufschlagt wird und diese Kunststoffe zunächst über zwei in der Verlängerung der Symmetrieachsen der Plastifiziereinheiten verlaufende Kanäle auf kurzem Wege in den Bereich je eines hydraulisch betätigten und senkrecht zur Fließrichtung des jeweiligen Kunststoffstroms verschiebbaren Schiebers leitet. Nach dem Verlassen des Schieberbereiches werden die Kunststoffströme dann mittels abknickender Kanäle symmetrisch zu einem gemeinsamen Düsenausgang geführt, wo sie einen erneuten abknickenden Verlauf nehmen müssen. Die jeweilige Abknickung ist dabei um so größer, je voluminöser einerseits die Plastifiziereinheiten sind und je kürzer andererseits die Düse bauen soll.

Die FR-A-2 631 883 zeigt demgegenüber eine wesentlich komplexer aufgebaute Anordnung, bei der zunächst zwei Nadenventildüsen V-förmig an einem Steuerkopf für die unterschiedliche Temperaturregelung zweier verschiedener plastifizierter Kunststoffmaterialien angeordnet sind, ohne daß diese in einen gemeinsamen Düsenausgang münden, sondern lediglich in eine gemeinsame Angußbuchse mit separaten Angußkanälen, die auch formseitig getrennt austreten und am fertigen Spritzgußteil jeweils zwei Angußpfropfen hinterlassen, die dann in zusätzlichen Arbeitsschritten entfernt werden müssen. Das eine Nadelventil wird von einer ersten Plastifiziereinheit mehr oder weniger direkt unter verhältnismäßig geringen Abweichungen von einer Geraden mit seinem plastifizierten Kunststoffmaterial beaufschlagt, das andere Nadenventil kann dann jedoch nur unter Verwendung eines seitlich weit ausladenden Förderarms von einer zweiten Plastifiziereinheit mit seinem plastifiziertem Kunststoffmaterial beaufschlagt werden, wobei zwangsläufig größere Abknickungen im Weg des Kunststoffmaterials erforderlich sind, insbesondere dann, wenn die zweite Plastifiziereinheit - wie im vorliegenden Fall gezeigt - parallel zur ersten Plastifiziereinheit angeordnet ist.

Jede derartige Abknickung stellt jedoch einen zusätzlichen Widerstand für das Fließverhalten der jeweiligen plastifizierten Kunststoffkomponente dar, der durch eine entsprechende zusätzliche Energiezufuhr zur normalerweise mit der jeweiligen Plastifiziereinheit gekoppelten Fördereinrichtung für die entsprechende Kunststoffkomponente verbunden ist. Insbesondere bei den zwischenzeitlich entwickelten Spritzgießmaschinen für sehr große und kompliziert gestaltete Kunststoffkörper, die - schon aus Gründen der Minimierung der Spritzgießintervalle zur Erhöhung des Produktausstoßes - mit erheblichen Einspritzdrücken arbeiten, würde jedoch jede Einsparung solcher zusätzlichen Energiezufuhren einerseits eine merkliche Kostenersparnis und andererseits eine deutliche Verringerung der Umweltbelastung mit sich bringen.

Eine Möglichkeit, solche Energieeinsparungen herbeizuführen, ist in der DE-PS 27 05 291 offenbart, die den Vorschlag enthält, gänzlich auf eine Düse zu verzichten und statt dessen die Auslaßkanäle der Plastifiziereinheiten direkt mit entsprechend vielen einzelnen Eingängen der im Formwerkzeug eingelassenen Angußbuchse zu koppeln, die ihrerseits gegenüber dem im Formwerkzeug befindlichen Formnest nur einen gemeinsamen Ausgang für alle Kunststoffkomponenten aufweist. Gegebenenfalls kann zwischen die Plastifiziereinheiten und die Angußbuchse ein Düsenkopf eingebracht werden, der offenbar - Erläuterungen dazu werden in der in Rede stehenden Druckschrift nicht gegeben - nur einzelne Verbindungskanäle zwischen den Plastifiziereinheiten und den einzelnen Eingängen der Angußbuchse enthält. Die Verwendung einer der vorstehend beschriebenen Anordnungen weist allerdings den Nachteil auf, daß der bei der Herstellung der Formteile zwangsläufig gebildete Anguß zum Formteil hin einen relativ großen Querschnitt hat, der nur mit einem beträchtlichen technischen Zusatzaufwand und damit auch zusätzlichen Kosten und zusätzlicher Energie einwandfrei vom fertigen Formteil entfernt werden kann - erst recht dann, wenn zur Herstellung des Formteils mehr als zwei plastifizierte Kunststoffkomponenten verwendet werden sollen.

Der letztgenannte Nachteil läßt sich zwar durch die Verwendung einer Angußbuchse gemäß der EP-OS 0 311 875 vermeiden, die formnestseitig zu einer engen Auslaßöffnung verjüngt ist, doch werden hier die Ströme der plastifizierten Kunststoffkomponenten mit vollem Bedacht zunächst in seitliche Mulden geführt, die den jeweiligen Strom abbremsen und umlenken sollen. Dies ergibt aber prinzipiell denselben Effekt wie die obengenannte abknickende Kanalführung innerhalb einer Düse.

Der vorliegenden Erfindung liegt daher die Aufgabe zugrunde, eine Düse für Spritzgießmaschinen mit den Merkmalen des Oberbegriffs des Patentanspruchs 1 zur Verfügung zu stellen, die die Energieverluste der Ströme von plastifizierten Kunststoffkomponenten beim Durchgang durch eine derartige Düse auf ein Minimum reduziert und dabei die Verwendung von Absperrorgangen bekannter Art sowie von üblichen Angußkanälen in den Formwerkzeugen nicht einschränkt.

Die Erfindung löst diese Aufgabe mittels der Merkmale des kennzeichnenden Teils des Patentanspruchs 1.

Dabei erweist es sich als besonders vorteilhaft, daß die Längsachse des Ausgangsbereichs der Verbindung von Plastifiziereinheit und Düseneingang mit der Längsachse des dort beginnenden Kanals einen Winkel α zwischen 140° und 180° einschließt, weil auf diese Weise zunächst von der Plastifiziereinheit bis zum Absperrorgan weitgehend eine gleichförmige laminare Strömung mit minimierten Reibungsverlusten aufrechterhalten wird, daß die Längsachse des vom Absperrorgan abgehenden Kanalabschnitts mit der Symmetrieachse des gemeinsamen Düsenausgangs einen Winkel zwischen 140° und 180° bildet, weil dann auch hier - jedenfalls dann, wenn im Absperrorgan keine merkliche Wirbelströmung erzeugt worden ist - vom Absperrorgang bis in den Angußkanal weitgehend eine gleichförmige laminare Strömung mit minimierten Reibungsverlusten aufrechterhalten wird, und daß außerdem die Längsachse des in das Absperrorgan einmündenden Kanalabschnitts mit der Längsachse des vom selben Absperrorgan abgehenden Kanalabschnitts einen Winkel β zwischen 140° und 180° einschließt, weil es in diesem Fall stets möglich ist, ein Absperrorgan bekannter Art auszuwählen, das - zumindest nach einer geeigneten Anpassung - gestattet, den Strom der plastifizierten Kunststoffkomponente auch innerhalb des Absperrorgans weitgehend - zumindest außerhalb eigentlicher Öffnungs- oder Schließvorgänge - als gleichförmige laminare Strömung mit minimierten Reibungsverlusten aufrechtzuerhalten, so daß letztlich für den gesamten Weg der plastifizierten Kunststoffkomponente von der Plastifiziereinheit bis zum Angußkanal eine Minimierung der Energieverluste und damit gleichzeitig eine schonende Materialführung erreicht wird.

Vorteilhaft ist bei einer besonderen Ausführungsform der erfindungsgemäßen Düse auch, daß mindestens einer der Düseneingänge von einer nur ihm zugeordneten Plastifiziereinheit mit einer plastifizierten Kunststoffkomponente versorgt wird und der Ausgang dieser Plastifiziereinheit unmittelbar an den zugehörigen Düseneingang angekoppelt ist, weil auf diese Art und Weise sowohl der Weg der entsprechenden plastifizierten Kunststoffkomponente von der Plastifiziereinheit zum Formhohlraum als auch die Zahl der unvermeidbaren Richtungsänderungen dieses Weges minimiert wird, was die Ursachen für mögliche Energieverluste der fließenden Kunststoffkomponente weiter reduziert. Dies kommt insbesondere dann in vorteilhafter Weise zum Tragen, wenn bei einer weiteren Ausführungsform der in Rede stehenden Düse bezüglich mindestens eines Düseneingangs die Längsachse der zugehörigen Plastifiziereinheit, die Längsachse einer ggf. daran anschließenden und geradlinig verlaufenden Verbindung und die Längsachse des von dem mit der Plastifiziereinheit direkt oder über die geradlinige Verbindung gekoppelten Düseneingangs abgehenden Kanalabschnitts miteinander fluchten.

Bei einem anderen Ausführungsbeispiel der vorliegenden Düse erweist es sich als vorteilhaft, daß die Absperrorgane als Schieber oder Drehschieber ausgebildet sind, die in geradlinig vom Düseneingang bis zum gemeinsamen Düsenausgang verlaufenden Kanälen angeordnet sind und deren Schließstellung im jeweiligen Kanal kontinuierlich und unabhängig von den anderen Absperrorganen steuer- und regelbar ist, weil so ein besonders einfacher und damit kostengünstiger Aufbau der Düse erreicht wird, der außerdem eine Richtungsänderung am jeweiligen Absperrorgan vermeidet und damit zugleich eine Quelle von Energieverlusten beseitigt - jedenfalls dann, wenn die Absperrorgane bekannter Art so ausgewählt und angeordnet werden, daß an ihnen außerhalb der eigentlichen Öffnungs- und Schließvorgänge keine merklichen Wirbelströme in der jeweils hindurchfließenden Kunststoffkomponente erzeugt werden.

Ein anderes Ausführungsbeispiel der erfindungsgemäßen Düse erweist sich dagegen dadurch als sehr vorteilhaft, daß als Absperrorgane Verschlußnadeln verwendet werden, die in je einem mit jeweils einem zugehörigen Kanal verbundenen Führungskanal, dessen Längsachse nicht mit der Längsachse des zugehörigen, vom entsprechenden Düseneingang zum Führungskanal führenden Kanalabschnitts fluchtet, verschiebbar angeordnet sind, wobei der zwischen der durch die Verschlußnadel veränderlichen Durchlaßöffnung des Führungskanals und dem gemeinsamen Düsenausgang angeordnete Ausgangsabschnitt jedes Führungskanals gleichzeitig den vom Absperrorgan abgehenden Kanalabschnitt des zugehörigen Kanals bildet, weil dadurch einerseits die Verwendung von sehr genau steuer- und regelbaren Absperrorganen ermöglicht wird und anderseits diese Absperrorgane so angeordnet werden können, daß jedes einzelne von ihnen von seinem dem gemeinsamen Düsenausgang abgekehrten Ende her unmittelbar zugänglich ist, was sowohl die Installation eines geeigneten steuerbaren Antriebes jedes Absperrorgans als auch die Wartung jedes Absperrorgans bedeutend erleichtert. Darüber hinaus hat die vorstehend genannte Anordnung der Absperrorgane den erheblichen Vorteil, daß die Hubwege der als steuerbare Verschlußnadeln ausgebildeten aktiven Elemente der Absperrorgane sehr viel kürzer gehalten werden können als bei den oben genannten Düsen, bei denen die beweglichen Kanalführungselemente gleichzeitig als Absperrorgane funktionieren, da es im vorliegenden Fall nicht erforderlich ist, die - bei flachem Winkel β verhältnismäßig langgezogene - Einmündungsöffnung jedes Kanals in den zugehörigen Führungskanal der Verschlußnadel mittels letzterer zu öffnen und zu schließen. Als besonders vorteilhaft erweist es sich dabei, wenn außerdem jede Verschlußnadel von einem separaten, unabhängig steuer- und regelbaren, auf ihr dem gemeinsamen Düsenausgang abgewandtes Ende einwirkenden Verschiebeantrieb betätigt wird, da dies die Variabilität der Spritzgießmaschine sowohl in bezug auf die Spritzintervalle der einzelnen Kunststoffkomponenten als auch auf die Auswahl und die Anordnung der einzelnen Verschiebeantriebe in oder an der Düse in erheblichem Umfang erhöht.

Bei einer speziellen Ausführungsform der erfindungsgemäßen Düse erweist es sich als sehr vorteilhaft, daß der Verschiebeantrieb eine gegen das dem gemeinsamen Düsenausgang abgewandte Ende der jeweiligen Verschlußnadel anstehende, gegenüber dem Düsenkörper ortsfest abgestützte und bezüglich des im vorderen, dem gemeinsamen Düsenausgang zugewandten Teil des Führungskanals herrschenden Spritzdruckes der jeweiligen Kunststoffkomponente eine Vorspannung erzeugende mechanische Federanordnung darstellt, die mit einer ringkolbenartigen Querschnittsvergrößerung der Verschlußnadel im hinteren, der Federanordnung zugewandten Teil des Führungskanals zusammenwirkt, weil dies eine besonders einfache Konstruktion sowohl des Verschiebeantriebs selbst als damit auch des zugehörigen Absperrorgans und der gesamten Düse zuläßt. In vorteilhafter Weise kann andererseits auch eine Ausführungsform der vorliegenden Düse zur Anwendung kommen, bei der der Verschiebeantrieb jeder Verschlußnadel entweder als beidseitig beaufschlagbare oder eine als einseitig beaufschlagbare und gegen eine Federkraft arbeitende Kolben-Zylinder-Anordnung ausgebildet ist, weil auf diese Weise eine erprobte und vielseitig verwendbare Antriebstechnik verwendet werden kann, was sowohl die Installation als auch die Wartung sowie den Betrieb der notwendigen Verschiebeantriebe wesentlich vereinfacht. Letzteres gilt insbesondere dann, wenn außerdem jeder Verschiebeantrieb kraftschlüssig mit dem Düsenkörper verbunden und sein wirksames Kraftübertragungselement, beispielsweise die Kolbenstange einer hydraulisch betätigten Kolben-Zylinder-Anordnung, unmittelbar an der zugehörigen Verschlußnadel angeschlagen ist.

Als besonders vorteilhaft erweist sich auch eine Ausführungsform der erfindungsgemäßen Düse, bei der zwischen dem wirksamen Kraftübertragungselement jedes Verschiebeantriebs, beispielsweise der Kolbenstange einer hydraulisch betätigten Kolben-Zylinder-Anordnung, und der zugehörigen Verschlußnadel eine Vorrichtung zur Festlegung des maximalen Hubes der Verschlußnadel, beispielsweise ein Gewindebolzen mit Kontermutter, angeordnet ist, weil dies eine besonders einfache und betriebssichere Möglichkeit bildet, den maximalen Hub jeder Verschlußnadel und damit die maximale Öffnung jedes Absperrorgans mit einem minimalen Aufwand an jedwede Anforderung von seiten der zu erzeugenden Kunststoffartikel anzupassen. Eine besonders einfache, betriebssichere und wartungsfreundliche Konstruktion jedes Absperrorgans ergibt sich darüber hinaus in vorteilhafter Weise, wenn einerseits jeder Verschiebeantrieb relativ zur Düse und zu seiner zugehörigen Verschlußnadel so angeordnet ist, daß die Längsachse seines wirksamen Kraftübertragungselementes, beispielsweise der Kolbenstange einer hydraulisch betätigten Kolben-Zylinder-Anordnung, mit der Längsachse der zugehörigen Verschlußnadel fluchtet und andererseits jede Verschlußnadel in dem nicht zum Durchfluß einer plastifizierten Kunststoffkomponente bestimmten Abschnitt ihres zugehörigen Führungskanals von einer auswechselbaren Verschleißbüchse geführt wird.

Von besonderem Vorteil erweist sich bei einer weiteren Ausführungsform auch, daß alle Verschlußnadeln durch Mittel bekannter Art gegen Drehungen um ihre Längsachse gesichert und an ihrem dem gemeinsamen Düsenausgang zugewandten Ende derart ausgeformt sind, daß sie einerseits im geschlossenen Zustand aller Kanäle gleichzeitig ohne gegenseitige Behinderung aus ihrem jeweiligen Führungskanal heraus in den Bereich des gemeinsamen Düsenausgangs ragen und andererseits während des Durchflusses einer oder mehrerer Kunststoffkomponente(n) durch den gemeinsamen Düsenausgang vor dem jeweiligen ausgeformten Ende einer oder mehrerer im geschlossenen Zustand befindlicher Verschlußnadeln keine Reste von einer oder mehreren zuvor gespritzten Kunststoffkomponente(n) gespeichert werden, weil dann das entsprechende Ende jeder in der Schließstellung befindlichen Verschlußnadel bei Offenstellung mindestens einer anderen Verschlußnadel von deren plastifizierter Kunststoffkomponente umspült und von Resten der eigenen plastifizierten Kunststoffkomponente gereinigt wird, so daß sich eindeutig festlegen läßt, wann sich welche plastifizierte Kunststoffkomponente im Bereich zwischen gemeinsamem Düsenausgang und dem Eingang in das/die Formnest(er) im Werkzeug befindet.

Eine spezielle Ausführungsform der erfindungsgemäßen Düse weist im übrigen den ganz besonderen Vorteil auf, daß sie von genau zwei Plastifiziereinheiten mit plastifizierten Kunststoffkomponenten versorgt wird und genau zwei Kanäle und dementsprechend auch zwei Führungskanäle aufweist, wobei die Führungskanäle in einer Schnittebene durch die Längsachse des gemeinsamen Düsenausgangs eine zu dieser Längsachse symmetrische V-förmige Anordnung bilden, deren eingeschlossener Keilwinkel (δ) kleiner als 40° ist, und die Düseneingänge der Kanäle in einer zur vorgenannten Schnittebene senkrechten Schnittebene durch die Längsachse des gemeinsamen Düsenausgangs symmetrisch zu letztgenannter Längsachse angeordnet sind, während die Kanalabschnitte von ihrem jeweiligen Düseneingang unter einem Neigungswinkel (ε) von höchstens ± 10° gegen die letztgenannte Schnittebene geradlinig zur Einmündung in ihren zugehörigen Führungskanal oberhalb von dessen durch die Verschlußnadel zu variierende Durchlaßöffnung verlaufen, weil dabei nicht nur die Einhaltung der durch Patentanspruch 1 vorgegebenen Winkelbereiche gewährleistet, sondern darüber hinaus noch dafür gesorgt wird, daß beim gleichzeitigen Spritzgießen zweier plastifizierter Kunststoffkomponenten auch diese im gemeinsamen Düsenausgang nur unter einem eingeschlossenen Keilwinkel ε von höchstens 40° zusammenlaufen und damit eine gegenseitige, mit Energieverlusten verbundene Verwirbelung und Abbremsung der zuvor weitgehend laminaren Strömungen beider Komponenten vermieden wird.

Ein Ausführungsbeispiel einer erfindungsgemäßen Düse ist im Detail in der Zeichnung dargestellt. Es zeigen:
- Fig. 1: Schnitt durch eine Düse in der Ebene zweier Führungskanäle für Verschlußnadeln - teilweise in durchbrochener Darstellung
- Fig. 2: Schnitt durch die Düse der Fig. 1 in der zu Fig. 1 senkrechten Ebene durch die Längsachse A des Düsenkörpers - teilweise in durchbrochener Darstellung

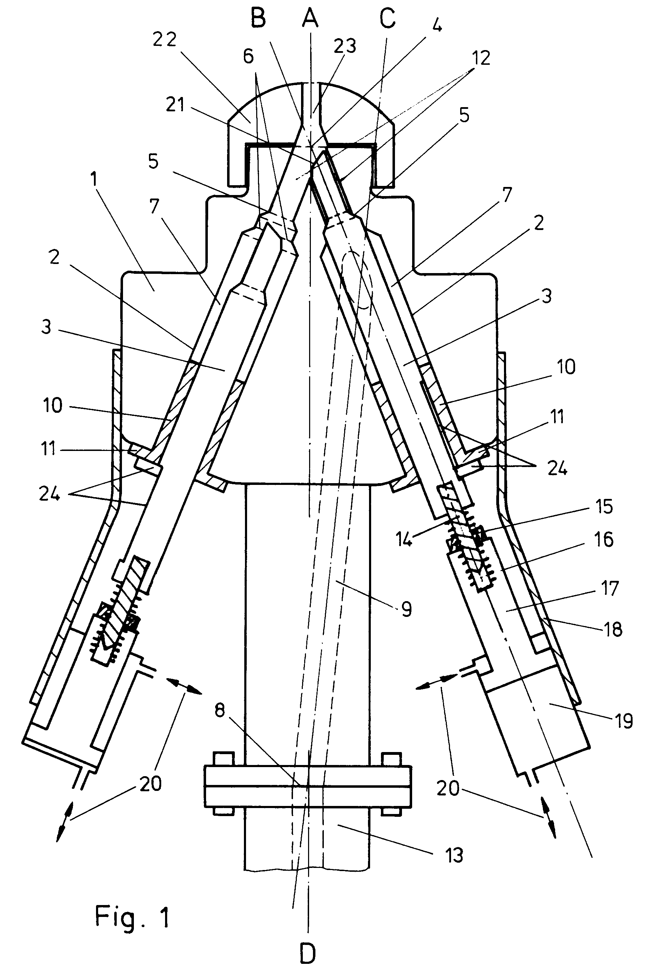

Die Fig. 1 zeigt zunächst einen Düsenkörper 1 mit zwei eine symmetrische V-förmige Anordnung ausbildenden Führungskanälen 2 zur Aufnahme je einer, gemeinsam mit dem entsprechenden Führungskanal 2 als Absperrorgan dienenden verschiebbaren Verschlußnadel 3, wobei die eine Verschlußnadel im geöffneten und die andere Verschlußnadel im geschlossenen Zustand dargestellt ist. Die Führungskanäle 2 weisen in ihrem vorderen, dem gemeinsamen Düsenausgang 4 zugewandten Teil jeweils einen Kegelsitz 5 auf, der im Zusammenspiel mit der zugehörigen Verschlußnadel 3 eine Durchlaßöffnung 6 variablen Querschnitts ausbildet, in ihrem mittleren Teil bilden sie zusammen mit der - dort dünneren - Verschlußnadel 3 je einen Ringraum 7 aus, in den der jeweils zugehörige, den jeweiligen Düseneingang 8 mit dem zugehörigen, aus Führungskanal 2 und Verschlußnadel 3 gebildeten Absperrorgan verbindende geradlinige Kanalabschnitt 9 des jeweiligen separaten Kanals zwischen Düseneingang 8 und gemeinsamem Düsenausgang 4 mündet, und in ihrem dem gemeinsamen Düsenausgang 4 abgewandten Teil tragen sie je eine auswechselbare Verschleißbüchse 10, deren kraftschlüssige Verbindung mit dem Düsenkörper 1 von beliebiger bekannter Art sein kann und hier nur durch je einen den jeweiligen Führungskanal 2 überkragenden flanschartigen Ansatz 11 angedeutet ist. Der vorderste Abschnitt jedes Führungskanals 2 zwischen Kegelsitz 5 und gemeinsamem Düsenausgang 4 ist gleichzeitig der von der variablen Durchlaßöffnung 6 des Absperrorgans zum gemeinsamen Düsenausgang 4 führende geradlinige Kanalabschnitt 12 des jeweiligen separaten Kanals zwischen zugehörigem Düseneingang 8 und gemeinsamem Düsenausgang 4. Der jeweilige Düseneingang 8 ist entweder direkt oder auch über ein kurzes Verbindungsstück, das allenfalls einer stetigen und schwach gekrümmten Raumkurve folgt und hier nicht explizit dargestellt ist, mit dem Ausgang einer hier nur schematisch angedeuteten Plastifiziereinheit 13 bekannter Art verbunden.

Jede Verschlußnadel 3 ist an ihrem dem gemeinsamen Düsenmund 4 abgekehrten Ende kraftschlüssig mit einem in ihrer Längsachse B verlaufenden Gewindebolzen 14 versehen, der einerseits eine Kontermutter 15 trägt und andererseits in eine Gewindebohrung 16 einer Kolbenstange 17 ragt, die zu einer über eine hier nur schematisch dargestellte Halterung 18 mit dem Düsenkörper 1 ortsfest verbundenen, mit einem fluiden Druckmedium betriebenen Kolben-Zylinder-Anordnung 19 bekannter Art gehört. Die Beaufschlagung der Kolben-Zylinder-Anordnung 19 mit einem fluiden Druckmedium ist schematisch durch die symbolischen Pfeile 20 dargestellt. Die Anordnung aus Gewindebolzen 14, Kontermutter 15 und Gewindebohrung 16 in der Kolbenstange 17 erlaubt eine sehr genaue Einstellung des maximalen Hubes der jeweiligen Verschlußnadel 3 auf einfache Art und Weise, die Kolben-Zylinder-Anordnung 19 zu jeder Verschlußnadel 3 gestattet mittels einer hier nicht dargestellten Steuer- und Regeleinrichtung bekannter Art eine problemlose Betätigung jeder Verschlußnadel 3 unabhängig von den übrigen Verschlußnadeln. Beide letztgenannten Anordnungen, nämlich die zum Einstellen des Verschlußnadelhubes und die zum Betätigen der Verschlußnadeln, können selbstverständlich auch mit anderen bekannten und gleichwirkenden Mitteln verifiziert werden. An ihrem dem gemeinsamen Düsenausgang 4 zugewandten Ende 21 ist jede Verschlußnadel 3 so geformt, daß einerseits alle Verschlußnadeln 3 einer Düse im geschlossenen Zustand aller Führungskanäle 2 gleichzeitig ohne gegenseitige Behinderung aus dem jeweiligen Führungskanal 2 in den Bereich des gemeinsamen Düsenausgangs 4 ragen können, was zusätzlich durch hier nur schematisch dargestellte Mittel (24) bekannter Art zur Sicherung jeder Verschlußnadel 3 gegen Drehungen um ihre Längsachse B ermöglicht wird, und daß andererseits während des Durchflusses einer Kunststoffkomponente durch den gemeinsamen Düsenausgang 4 über die eine Verschlußnadel 3 vor dem ausgeformten Ende 21 der anderen, im geschlossenen Zustand befindlichen Verschlußnadel 3 keine Reste einer zuvor gespritzten Kunststoffkomponente gespeichert werden.

Dem gemeinsamen Düsenausgang 4 ist im dargestellten Fall eine dem Düsenkörper 1 mittels bekannter Maßnahmen, beispielsweise einer nicht im einzelnen dargestellten Schraubverbindung, aufgesetzte Düsenkappe 22 mit einer Düsenbohrung 23 vorgeschaltet, um eine paßgerechte Verbindung der Düse mit dem im Werkzeug der Spritzgießmaschine vorhandenen Angußkanal herzustellen, wobei dieser bekannte Teil einer Düsenanordnung hier nur der Vollständigkeit halber dargestellt ist.

In der vorliegenden Darstellung bilden die mit C und D bezeichneten Längsachsen des vom Düseneingang 8 zum Ringraum 7 verlaufenden geradlinigen Kanalabschnitts 9 bzw. des Ausgangsbereiches einer Plastifiziereinheit 13 oder des Ausgangsbereiches eines zwischen Plastifiziereinheit 13 und Düseneingang 8 installierten, hier nicht explizit dargestellten Verbindungsstükkes einen Winkel α in der Weise, daß der aus Richtung der Plastifiziereinheit 13 in den Düseneingang 8 einlaufende Abschnitt der Längsachse D, die hier nur zufällig als Verlängerung der Längsachse A erscheint, mit dem aus dem Düseneingang 8 in Richtung auf den Ringraum 7 auslaufenden Abschnitt der Längsachse C in der von diesen beiden Längsachsen aufgespannten Ebene, die im allgemeinen und auch im dargestellten Fall nicht mit der Zeichenebene übereinstimmt, da die sichtbaren Achsen nur Projektionen der tatsächlich im dreidimensionalen Raum verlaufenden Längsachsen der Plastifiziereinheit 13 bzw. des Kanalabschnitts 9 sind, einen Winkel einschließen, dessen Zahlenwert in der tatsächlichen Konstruktion in dem Bereich zwischen 140° und 180° liegt. Die Projektion der tatsächlichen Längsachse C in die Zeichenebene schließt dagegen mit der in der Zeichenebene liegenden Längsachse A des Düsenkörpers, sofern beide genannten Achsen als von der Projektion des Mittelpunktes des Düseneingangs 8 in die Zeichenebene in Richtung auf den gemeinsamen Düsenausgang 4 bzw. den Ringraum 7 verlaufend angesehen werden, einen Winkel ε in der Zeichenebene ein, dessen Zahlenwert in der tatsächlichen Konstruktion in einem Bereich von ± 10° liegt.

Die mit B bezeichnete Längsachse eines Führungskanals 2 und die Längsachse C des Kanalabschnitts 9 bilden in der von ihnen aufgespannten Ebene, die ebenfalls im allgemeinen und auch im vorliegenden Fall nicht mit der Zeichenebene übereinstimmt, da hier nur die Achse B auch tatsächlich in der Zeichenebene verläuft, einen Winkel β in der Weise, daß der vom Düseneingang 8 in den Schnittpunkt beider genannten Achsen einlaufende Abschnitt der Längsachse C mit dem aus diesem Schnittpunkt zum gemeinsamen Düsenausgang 4 auslaufenden Abschnitt der Längsachse B einen Winkel einschließt, dessen Zahlenwert in der tatsächlichen Konstruktion ebenfalls in dem Bereich zwischen 140° und 180° liegt.

In entsprechender Weise bilden der aus der Richtung der Kolben-Zylinder-Anordnung 19 her in den gemeinsamen Düsenausgang 4 einlaufende Abschnitt der Längsachse B mit dem aus dem gemeinsamen Düsenausgang 4 in Richtung auf das Werkzeug der Spritzgießmaschine auslaufenden Abschnitt der Längsachse A des Düsenkörpers einen Winkel γ in der Zeichenebene, dessen Zahlenwert in der tatsächlichen Konstruktion ebenfalls in dem Bereich zwischen 140° und 180° liegt. Die Längsachsen B beider Führungskanäle 2 schließen dann, wenn beide dargestellten und in der Zeichenebene liegenden Längsachsen B als vom gemeinsamen Düsenausgang 4 aus gleichzeitig in Richtung auf ihre jeweiligen Kolben-Zylinder-Anordnungen 19 oder gleichzeitig in Richtung auf das Werkzeug der Spritzgießmaschine verlaufend angesehen werden, einen Keilwinkel δ ein, dessen Zahlenwert δ = 2 (180-γ) beträgt.

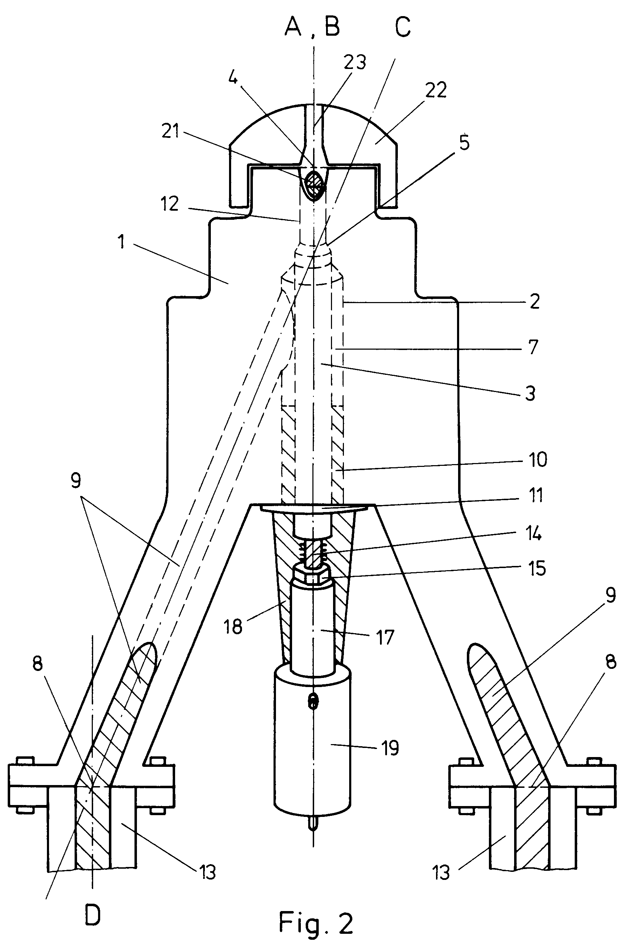

Die Fig. 2 zeigt einen Schnitt durch die Düse der Fig. 1 in einer zur dortigen Zeichenebene senkrechten Ebene durch die Längsachse A des Düsenkörpers 1. Die Bezugszeichen haben dabei die gleiche Bedeutung wie in Fig. 1. Wesentlicher Unterschied ist hier die Darstellung beider Düseneingänge 8 im Schnitt und nur eines Führungskanals 2 in durchbrochener Darstellung, wobei insbesondere deutlich herausgestellt wird, daß einerseits der geradlinige Kanalabschnitt 9, der vom linken Düseneingang 8 zum Ringraum 7 des zugehörigen Führungskanals 2 verläuft, unter einem Winkel ε im Bereich zwischen 0° und - 10° unter die Zeichenebene abtaucht, während der andere - rechte - geradlinige Kanalabschnitt 9 unter dem komplementären Winkel ε im Bereich zwischen 0° und + 10° aus der Zeichenebene herausläuft, und andererseits die Längsachsen A und D bzw. die Projektion der letzteren in der Fig. 1 tatsächlich nur zufällig in der Zeichenebene zusammenfallen. Dafür fallen in der Fig. 2 nunmehr die Längsachsen A und B bzw. die Projektion der letzteren in der Zeichenebene zusammen.

Die Beschränkung auf nur zwei Plastifiziereinheiten 13 und zwei zugehörige Führungskanäle 2 ist in der vorliegenden Zeichnung selbstverständlich nur aus Gründen der Übersicht erfolgt und bedeutet keine grundsätzliche Einschränkung des Patentbegehrens.

## Patentansprüche

1. Düse für Spritzgießmaschinen zum abwechselnden, teilweise überlappenden oder gleichzeitigen Einspritzen mindestens zweier plastifizierter Kunststoffkomponenten, von denen mindestens eine ggf. auch mit einem Treibmittel zum Aufschäumen versetzt sein kann, über einen gemeinsamen Düsenausgang (6) in das Formwerkzeug der Spritzgießmaschine, wobei jede Kunststoffkomponente in einer separaten Plastifiziereinheit (13) erzeugt wird und jede Plastifiziereinheit (13) mit mindestens einem separaten Düseneingang (8) verbunden ist, wobei weiterhin jeder Düseneingang (8) innerhalb der Düse mittels eines separaten Kanals (9, 12) mit dem gemeinsamen Düsenausgang (4) verbunden und jeder Kanal (9, 12) mit einem eigenen, unabhängig betätigbaren Absperrorgan (2, 3, 5, 6) versehen ist, und wobei außerdem jede Plastifiziereinheit (13) auf kurzem Wege mit dem/den zu versorgenden Düseneingang/-gängen (8) verbunden ist und jeder Kanal (9, 12) von seinem Düseneingang (8) über einen Kanalabschnitt (9) geradlinig zum zugehörigen Absperrorgan (2, 3, 5, 6) und von diesem wiederum über einen weiteren Kanalabschnitt (12) geradlinig zum gemeinsamen Düsenausgang (4) verläuft,
dadurch gekennzeichnet,
daß die Längsachse (D) des Ausgangsbereichs der Verbindung von Plastifiziereinheit (13) und Düseneingang (8) mit der Längsachse (C) des dort beginnenden Kanalabschnitts (9) einerseits und die Längsachse (C) des in das Absperrorgan (2, 3, 5, 6) einmündenden Kanalabschnitts (9) mit der Längsachse (B) des vom Absperrorgan (2, 3, 5, 6) abgehenden Kanalabschnitts (12) andererseits sowie die Längsachse (B) des vom Absperrorgan (2, 3, 5, 6) in den gemeinsamen Düsenausgang (4) einmündenden Kanalabschnitts (12) mit der Symmetrieachse (A) des gemeinsamen Düsenausgangs (4) jeweils einen Winkel (α, β, γ) zwischen 140° und 180° einschließen.

2. Düse für Spritzgießmaschinen nach Anspruch 1,
dadurch gekennzeichnet,
daß mindestens einer der Düseneingänge (8) von einer nur ihm zugeordneten Plastifiziereinheit (13) mit einer plastifizierten Kunststoffkomponente versorgt wird und der Ausgang dieser Plastifiziereinheit (13) unmittelbar an den zugehörigen Düseneingang (8) angekoppelt ist.

3. Düse für Spritzgießmaschinen nach einem der vorangegangenen Ansprüche 1 oder 2,
dadurch gekennzeichnet,
daß bezüglich mindestens eines Düseneingangs (8) die Längsachse (D) der zugehörigen Plastifiziereinheit (13), die Längsachse einer ggf. daran anschließenden und geradlinig verlaufenden Verbindung und die Längsachse (C) des von dem mit der Plastifiziereinheit (13) direkt oder über die geradlinige Verbindung gekoppelten Düseneingangs (8) abgehenden Kanalabschnitts (9) miteinander fluchten.

4. Düse für Spritzgießmaschinen nach einem der vorangegangenen Ansprüche 1 bis 3,
dadurch gekennzeichnet,
daß die Absperrorgane als Schieber oder Drehschieber ausgebildet sind, die in geradlinig vom Düseneingang (8) bis zum gemeinsamen Düsenausgang (4) verlaufenden Kanälen angeordnet sind und deren Schließstellung im jeweiligen Kanal kontinuierlich und unabhängig von den anderen Absperrorganen steuer- und regelbar ist.

5. Düse für Spritzgießmaschinen nach einem der vorangegangenen Ansprüche 1 bis 3,
dadurch gekennzeichnet,
daß die Absperrorgane (2, 3) aus Verschlußnadeln (3) bestehen, die in je einem mit jeweils einem zugehörigen Kanalabschnitt (9) verbundenen Führungskanal (2), dessen Längsachse (B) nicht mit der Längsachse (C) des zugehörigen Kanalabschnitts (9) fluchtet, verschiebbar angeordnet sind, wobei der zwischen der durch die Verschlußnadel (3) veränderlichen Durchlaßöffnung (6) des Führungskanals (2) und dem gemeinsamen Düsenausgang (4) angeordnete Ausgangsabschnitt (12) jedes Führungskanals (2) gleichzeitig den vom Absperrorgan (2, 3) abgehenden Kanalabschnitt (12) des zugehörigen Kanals (9, 12) bildet.

6. Düse für Spritzgießmaschinen nach Anspruch 5,
dadurch gekennzeichnet,
daß jede Verschlußnadel (3) von einem separaten, unabhängig steuer- und regelbaren, auf ihr dem gemeinsamen Düsenausgang (4) abgewandtes Ende einwirkenden Verschiebeantrieb (19) betätigt wird.

7. Düse für Spritzgießmaschinen nach Anspruch 6,
dadurch gekennzeichnet,
daß der Verschiebeantrieb (19) eine gegen das dem gemeinsamen Düsenausgang (4) abgewandte Ende der jeweiligen Verschlußnadel (3) anstehende, gegenüber dem Düsenkörper ortsfest abgestützte und bezüglich des im vorderen, dem gemeinsamen Düsenausgang (4) zugewandten Teil des Führungskanals (2) herrschenden Spritzdruckes der jeweiligen Kunststoffkomponente eine Vorspannung erzeugende mechanische Federanordnung darstellt, die mit einer ringkolbenartigen Querschnittsvergrößerung der Verschlußnadel (3) im hinteren, der Federanordnung zugewandten Teil des Führungskanals (2) zusammenwirkt.

8. Düse für Spritzgießmaschinen nach Anspruch 6,
dadurch gekennzeichnet,
daß der Verschiebeantrieb (19) jeder Verschlußnadel (3) entweder als beidseitig beaufschlagbare oder eine als einseitig beaufschlagbare und gegen eine Federkraft arbeitende Kolben-Zylinder-Anordnung (19) ausgebildet ist.

9. Düse für Spritzgießmaschinen nach einem der vorangegangenen Ansprüche 6 oder 8,
dadurch gekennzeichnet,
daß jeder Verschiebeantrieb (19) kraftschlüssig mit dem Düsenkörper (1) verbunden und sein wirksames Kraftübertragungselement, beispielsweise die Kolbenstange (17) einer hydraulisch betätigten Kolben-Zylinder-Anordnung (19), unmittelbar an der zugehörigen Verschlußnadel (3) angeschlagen ist.

10. Düse für Spritzgießmaschinen nach einem der vorangegangenen Ansprüche 6 oder 8,
dadurch gekennzeichnet,
daß zwischen dem wirksamen Kraftübertragungselement jedes Verschiebeantriebs (19), beispielsweise der Kolbenstange (17) einer hydraulisch betätigten Kolben-Zylinder-Anordnung (19), und der zugehörigen Verschlußnadel (3) eine Vorrichtung zur Festlegung des maximalen Hubes der Verschlußnadel (3), beispielsweise ein Gewindebolzen (14) mit Kontermutter (15), angeordnet ist.

11. Düse für Spritzgießmaschinen nach einem der vorangegangenen Ansprüche 6 oder 8 bis 10,
dadurch gekennzeichnet,
daß jeder Verschiebeantrieb (19) relativ zur Düse und zu seiner zugehörigen Verschlußnadel (3) so angeordnet ist, daß die Längsachse (B) seines wirksamen Kraftübertragungselementes, beispielsweise der Kolbenstange (17) einer hydraulisch betätigten Kolben-Zylinder-Anordnung (19), mit der Längsachse (B) der zugehörigen Verschlußnadel (3) fluchtet.

12. Düse für Spritzgießmaschinen nach einem der vorangegangenen Ansprüche 5 bis 11,
dadurch gekennzeichnet,
daß jede Verschlußnadel (3) in dem nicht zum Durchfluß einer plastifizierten Kunststoffkomponente bestimmten Abschnitt ihres zugehörigen Führungskanals (2) von einer auswechselbaren Verschleißbüchse (10) geführt wird.

13. Düse für Spritzgießmaschinen nach einem der vorangegangenen Ansprüche 5 bis 12,
dadurch gekennzeichnet,
daß alle Verschlußnadeln (3) durch Mittel (24) bekannter Art gegen Drehungen um ihre Längsachse gesichert und an ihrem dem gemeinsamen Düsenausgang (4) zugewandten Ende derart ausgeformt sind, daß sie im geschlossenen Zustand aller Kanäle (9, 12) gleichzeitig ohne gegenseitige Behinderung aus ihrem jeweiligen Führungskanal (2) heraus in den Bereich des gemeinsamen Düsenausgangs (4) ragen.

14. Düse für Spritzgießmaschinen nach Anspruch 13,
dadurch gekennzeichnet,
daß die Ausformung jedes dem gemeinsamen Düsenausgang (4) zugewandten Endes der Verschlußnadeln (3) derart gestaltet ist, daß während des Durchflusses einer oder mehrerer Kunststoffkomponente(n) durch den gemeinsamen Düsenausgang (4) vor dem jeweiligen ausgeformten Ende einer oder mehrerer im geschlossenen Zustand befindlicher Verschlußnadel(n) (3) keine Reste von einer oder mehreren zuvor gespritzten Kunststoffkomponente(n) gespeichert werden.

15. Düse für Spritzgießmaschinen nach einem der vorangegangenen Ansprüche 5 bis 14,
dadurch gekennzeichnet,
daß sie von genau zwei Plastifiziereinheiten mit plastifizierten Kunststoffkomponenten versorgt wird und genau zwei Kanäle (9, 12) und dementsprechend auch zwei Führungskanäle (2) aufweist, wobei die Führungskanäle (2) in einer Schnittebene durch die Längsachse (A) des gemeinsamen Düsenausgangs (4) eine zu dieser Längsachse symmetrische V-förmige Anordnung bilden, deren eingeschlossener Keilwinkel (δ) kleiner als 40° ist, und die Düseneingänge (8) der Kanäle (9, 12) in einer zur vorgenannten Schnittebene senkrechten Schnittebene durch die Längsachse (A) des gemeinsamen Düsenausgangs (4) symmetrisch zu letztgenannter Längsachse (A) angeordnet sind, während die Kanalabschnitte (9) von ihrem jeweiligen Düseneingang (8) unter einem Neigungswinkel (ε) von höchstens ± 10° gegen die letztgenannte Schnittebene geradlinig zur Einmündung in ihren zugehörigen Führungskanal (2) oberhalb von dessen durch die Verschlußnadel (3) zu variierende Durchlaßöffnung (6) verlaufen.

## Claims

1. Nozzle for injection moulding machines for alternating, partly overlapping, or simultaneous injection of at least two plastified plastic components, of which at least one may also be added with an expanding agent for foaming, through a common nozzle outlet orifice (6) into the mould of the injection moulding machine, each plastic component being produced in a separate plastifying unit (13) and each plastifying unit (13) being connected with at least one separate nozzle inlet orifice (8), each nozzle inlet orifice (8) being connected within the nozzle, through a separate channel (9, 12), with the common nozzle outlet orifice (4), each channel (9, 12) having its own shutoff element (2, 3, 5, 6) which can be independently operated, each plastifying unit (13) having a short connection with the nozzle inlet orifice(s) (8) to be supplied, and each channel (9, 12) running from its specific nozzle inlet orifice (8) via a straight channel section (9) to its specific shutoff element (2, 3, 5, 6) and from there over another straight channel section (12) to the common nozzle outlet orifice (4),
characterized in
that an angle (α, β, γ) of 140° to 180° is formed by the longitudinal axis (D) of the outlet zone of the connection between the plastifying unit (13) and the nozzle inlet orifice (8) with the longitudinal axis (C) of the channel section (9) which begins there, on the one side and on the other side by the longitudinal axis (C) of channel section (9) ending in the shutoff element(2, 3, 5, 6), with the longitudinal axis (B) of channel section (12) which comes from the shutoff element (2, 3, 5, 6), as well as by the longitudinal axis (B) of channel section (12) running from the shutoff element(2, 3, 5, 6) to the common nozzle outlet orifice (4), with the axis of symmetry (A) of the common nozzle outlet orifice (4).

2. Nozzle for injection moulding machines according to Claim 1,
characterized in
that at least one of the nozzle inlet orifices (8) is supplied with a plastified plastic component from a plastifying unit (13) feeding only this specific nozzle inlet orifice (8), and that the outlet end of this plastifying unit (13) is directly coupled to the nozzle inlet orifice (8) to which it belongs.

3. Nozzle for injection moulding machines according to any one of the above indicated claims 1 or 2,
characterized in
that with respect to at least one nozzle inlet orifice (8), the longitudinal axis (D) of the plastifying unit (13) supplying it, the longitudinal axis of a possibly following straight connection and the longitudinal axis (C) of the channel section (9) coming from the nozzle inlet orifice (8) which is coupled with the plastifying unit (13) either directly or by the straight connection, are in line with one another.

4. Nozzle for injection moulding machines according to anyone of the above indicated claims 1 to 3,
characterized in
that the shutoff elements are formed as gates or rotary vanes arranged in straight channels leading from the nozzle inlet orifice (8) to the common nozzle outlet orifice (4), and that the closing position of the said gates or vanes can be adjusted and controlled continually and independently of the other shutoff elements.

5. Nozzle for injection moulding machines according to anyone of the above indicated claims 1 to 3,
characterized in
that the shutoff elements (2, 3) are stopper needles (3) each of which is shiftable in its own guide channel (2), each guide channel (2) belonging to one specific channel section (9), the longitudinal axis (B) of the guide channels (2) being not in line with the longitudinal axis (C) of the corresponding channel section (9), and where the outlet zone (12) of each guide channel (2), located between the opening (6) of the guide channel (2), which is adjustable by the stopper needle (3), and the common nozzle outlet orifice (4), is at the same time the outgoing channel section (12) of the corresponding channel (9, 12) from the shutoff element (2, 3).

6. Nozzle for injection moulding machines according to claim 5,
characterized in
that each stopper needle (3) is operated by a separate independently controllable and adjustable shifting drive (19) which acts upon the needle end opposite to the common nozzle outlet orifice (4).

7. Nozzle for injection moulding machines according to claim 6,
characterized in
that the shifting drive (19) is a mechanical spring arrangement pressing against the stopper needle(s) (3) at the end opposite to the common nozzle outlet orifice (4), the springs being firmly attached to the nozzle body and producing an initial tension with respect to the injection pressure of the plastic component concerned prevailing at the front end of the guide channel (2) fronting the common nozzle outlet orifice (4), the said spring arrangement acting together with an annular piston-like cross-sectional enlargement of the stopper needle (3) in the rear end of the guide channel (2) fronting the spring arrangement.

8. Nozzle for injection moulding machines according to claim 6,
characterized in
that the shifting drive (19) of each stopper needle (3) is formed as a cylinder and piston arrangement (19) with admission either from both sides or from one side against the resistance of the spring.

9. Nozzle for injection moulding machines according to any one of the above indicated claims 6 or 8,
characterized in
that each shifting drive (19) has a frictional connection with the nozzle body (1) and its active power transmitting element, e.g., the piston rod (17) of a hydraulically operated cylinder and piston arrangement (19), is directly attached to the stopper needle (3) which it belongs to.

10. Nozzle for injection moulding machines according to anyone of the above indicated claims to or 8,
characterized in
that a device limiting the maximum stroke of the stopper needle (3), e.g., a threaded bolt (14) and counternut (15), is installed between the active power transmitting element of each shifting drive (19), e.g., the piston rod (17) of a hydraulically operated cylinder and piston arrangement (19), and the corresponding stopper needle (3).

11. Nozzle for injection moulding machines according to anyone of the above indicated claims 6 or 8 to 10,
characterized in
that each shifting drive (19) is so arranged relatively to the nozzle and the stopper needle (3) to which it belongs, that the longitudinal axis (B) of its active power transmitting element, e.g., the piston rod (17) of a hydraulically operated cylinder and piston arrangement (19), is in line with the longitudinal axis ((B) of the stopper needle (3) to which it belongs.

12. Nozzle for injection moulding machines according to anyone of the above indicated claims 5 to 11,
characterized in
that each stopper needle (3) is guided by a replaceable wear lining (10) in that section of its guide channel (2) in which there is no flow of plastified plastic component.

13. Nozzle for injection moulding machines according to anyone of the above indicated claims 5 to 12,
characterized in
that all stopper needles (3) are secured by a means of the known kind (24) against rotation around their longitudinal axis, and that the needle ends fronting the common nozzle outlet orifice (4) are so formed that when all channels (9, 12) are closed, these needles protrude simultaneously from their respective guide channels into the zone of the common nozzle outlet orifice (4) without interfering with one another.

14. Nozzle for injection moulding machines according to claim 13,
characterized in
that each of the stopper needles (3) is so formed at its end fronting the common nozzle outlet orifice (4) that while one or several plastic component(s) flow(s) through the common nozzle outlet orifice (4) no remaining plastic component can collect at the formed end of one or several of the stopper needle(s) (3) after such needle(s) has (have) moved into closed position.

15. Nozzle for injection moulding machines according to anyone of the above indicated claims 5 to 14,
characterized in
that it is fed with plastified plastic components by exactly two plastification units and has exactly two channels (9, 12) and, accordingly, two guide channels (2), these guide channels (2) being arranged on a cutting plane through the longitudinal axis (A) of the common nozzle outlet orifice (4) so as to form a V symmetrical to that longitudinal axis, the wedge angle (δ) of the V being smaller than 40°, and that the nozzle inlet orifices (8) of the channels (9, 12) are arranged symmetrically to the longitudinal axis (A) of the common nozzle outlet orifice (4) on a cutting plane through that longitudinal axis (A) perpendicular to the first indicated cutting plane, whereas the channel sections (9) run rectilinearly from their respective nozzle inlet orifices (8) at an angle of inclination (ε) of at most ±10° against the last mentioned cutting plane to the inlet of their respective guide channel (2) above its opening (6) which is adjustable by means of the stopper needle (3).

## Revendications

1. Tuyère pour machines de moulage par injection, pour injection soit alternante, soit partiellement en overlapping ou simultanée, d'au moins deux composants de matière plastique ramollis, dont au moins un peut le cas échéant être additionné d'un agent moussant, par un orifice de tuyère commun (6) dans le moule de la machine de moulage par injection, chaque composant de matière plastique étant préparé dans une unité de plastification séparée (13) et chaque unité de plastification (13) étant en communication avec au moins une entrée de tuyère séparée (8), chaque entrée de tuyère (8) étant en communication à l'intérieur de la tuyère par un canal séparé (9, 12) avec l'orifice de tuyère commun (4), chaque canal (9, 12) étant équipé de son propre organe d'arrêt (2, 3, 5, 6) indépendamment réglable, et chaque unité de plastification (13) étant en outre reliée à courte distance avec le(s) entrée(s) de tuyère (8) à alimenter, et chaque canal (9, 12) passant en ligne droite depuis son entrée de tuyère (8) par un tronc de canal (9) à l'organe d'arrêt (2, 3, 5, 6) lui réservé et à partir de ce dernier, par un autre tronc de canal (12), en ligne droite à l'orifice de tuyère commun (4),
caractérisé par ce que
l'axe longitudinal (D) de la zone de sortie de la liaison entre l'unité de plastification (13) et l'entrée de tuyère (8) avec l'axe longitudinal (C) du tronc de canal (9) qui y commence, d'une part, et l'axe longitudinal (C) du tronc de canal (9) qui se termine à l'organe d'arrêt (2, 3, 5, 6), avec l'axe (B) du tronc de canal (12) partant de l'organe d'arrêt (2, 3, 5, 6), d'autre part, ainsi que l'axe (B) du tronc de canal (12) venant de l'organe d'arrêt (2, 3, 5, 6) et se terminant à l'orifice de tuyère commun (4), forment avec l'axe de symétrie (A) de l'orifice de tuyère commun (4) un angle (α, β, γ) qui est compris entre 140° et 180°.

2. Tuyère pour machines de moulage par injection suivant la revendication 1,
caractérisée par ce que
au moins une des entrées de tuyère (8) est alimentée d'un composant de matière plastique ramolli par une unité de plastification (13) uniquement lui réservée, et que la sortie de ladite unité de plastification (13) est directement accouplée à l'entrée de tuyère (8) lui réservée.

3. Tuyère pour machines de moulage par injection suivant l'une quelconque des revendications 1 ou 2 ci-dessus indiquées,
caractérisée par ce que
par rapport à au moins une entrée de tuyère (8), l'axe longitudinal (D) de l'unité de plastification (13) lui réservée et l'axe longitudinal d'une éventuelle liaison droite qui lui suit, ainsi que l'axe longitudinal (C) du tronc de canal (9) partant de l'entrée de tuyère (8), accouplée à l'unité de plastification (13) soit directement, soit par la liaison droite, sont alignés les uns sur les autres.

4. Tuyère pour machines de moulage par injection suivant l'une quelconque des revendications 1 à 3 ci-dessus indiquées,
caractérisée par ce que
les organes d'arrêt sont conçus comme vannes à passage direct ou tiroirs rotatifs disposés dans des canaux droits reliant l'entrée de soupape (8) avec l'orifice de tuyère commun (4), et dont la position de fermeture peut être commandée et réglée continuellement et indépendamment des autres organes d'arrêt dans le canal concerné.

5. Tuyère pour machines de moulage par injection suivant l'une quelconque des revendications 1 à 3 ci-dessus indiquées,
caractérisée par ce que
les organes d'arrêt (2, 3) consistent d'aiguilles obturatrices (3) déplaçables chacune dans son propre canal de guidage (2), dont chacun est relié à un tronc de canal (9) lui réservé, l'axe longitudinal (B) du canal de guidage (2) ne s'alignant pas sur l'axe longitudinal (C) du tronc de canal (9) lui réservé, et que le tronçon de sortie (12) de chaque canal de guidage (2), disposé entre l'ouverture de passage (6) variable moyennant l'aiguille obturatrice (3) du canal de guidage (2) et l'orifice de tuyère commun (4), constitue en même temps le tronçon (12) du canal (9, 12), qui débute à l'organe d'arrêt (2, 3).

6. Tuyère pour machines de moulage par injection suivant revendication 5,
caractérisée par ce que
chaque aiguille obturatrice (3) est actionnée par un dispositif de commande (19) séparé à contrôle et réglage indépendant, agissant sur l'extrémité de l'aiguille obturatrice (3) qui se trouve opposée à l'orifice de tuyère commun (4).

7. Tuyère pour machines de moulage par injection suivant revendication 6,
caractérisée par ce que
le dispositif de commande (19) est un arrangement d'un ou de plusieurs ressorts mécaniques appuyés contre le bout éloigné des correspondantes aiguilles obturatrices (3) par rapport à l'orifice de tuyère commun (4) et solidement fixés vis-à-vis du corps de la tuyère, et produisant une précontrainte contre la pression d'injection du composant de matière plastique concerné régnant dans la partie avant du canal de guidage (2) rapprochée de l'orifice de tuyère commun (4), lesdits ressorts mécaniques agissant en concours avec la section élargie, ressemblant à un piston annulaire, de l'aiguille obturatrice (3) dans la partie arrière du canal de guidage (2) rapprochée des ressorts mécaniques.

8. Tuyère pour machines de moulage par injection suivant la revendication 6,
caractérisée par ce que
le dispositif de commande (19) de chaque aiguille obturatrice (3) est conçu comme arrangement de cylindres et pistons (19) alimentés soit des deux côtés soit d'un seul côté contre la résistance d'un ressort.

9. Tuyère pour machines de moulage par injection suivant l'une quelconque des revendications 6 ou 8,
caractérisée par ce que
chaque dispositif de commande (19) est rigidement monté sur le corps de la tuyère (1) et que son élément de transmission de force actif, p.e. la tige de piston (17) d'un arrangement de cylindres et pistons (19), est directement monté sur l'aiguille obturatrice correspondante (3).

10. Tuyère pour machines de moulage par injection suivant l'une quelconque des revendications 6 ou 8,
caractérisée par ce que
un dispositif limitant la course maximale de l'aiguille obturatrice (3), p. e. un boulon fileté (14) avec contre-écrou (15), est placé entre l'élément de transmission de force actif de chaque dispositif de commande (19), p. e. la tige de piston (17) d'un arrangement de cylindres et pistons hydrauliques (19), et l'aiguille obturatrice (3) correspondante.

11. Tuyère pour machines de moulage par injection suivant l'une quelconque des revendications 6 ou 8 à 10 ci-dessus indiquées,
caractérisée par ce que
chaque dispositif de commande (19) est disposé d'une telle manière, par rapport à la tuyère et à l'aiguille obturatrice (3) qu'il commande, que l'axe longitudinal (B) de son élément de transmission de force actif, p.e. la tige de piston (17) d'un arrangement de cylindres et pistons hydrauliques (19), s'aligne sur l'axe longitudinal (B) de l'aiguille obturatrice (3) qu'il commande.

12. Tuyère pour machines de moulage par injection suivant l'une quelconque des revendications 5 à 11 ci-dessus indiquées,
caractérisée par ce que
chaque aiguille obturatrice (3) est guidée par une douille d'usure remplaçable (10) qui est installée dans le canal de guidage (2) lui réservé dans la partie non destinée au passage d'un composant de matière plastique ramolli.

13. Tuyère pour machines de moulage par injection suivant l'une quelconque des revendications 5 à 12 ci-dessus indiquées,
caractérisée par ce que
toutes les aiguilles obturatrices (3) sont assurées, par des moyens connus (24), contre la rotation autour de leur axe longitudinal, et que leur extrémité rapprochée de la sortie de tuyère commune (4) est d'une telle forme qu'a l'état fermé de tous les canaux (9, 12), elles sortent simultanément, sans s'empêcher mutuellement, de leurs canaux de guidage (2) dans la zone de l'orifice de tuyère commun (4).

14. Tuyère pour machines de moulage par injection suivant la revendication 13,
caractérisée par ce que
l'extrémité rapprochée de l'orifice de tuyère commun (4) de chaque aiguille obturatrice (3) présente une telle forme que pendant le passage d'un ou de plusieurs composants de matière plastique par l'orifice de tuyère commun (4) il ne peut s'accumuler des restes du ou des composant(s) de matière plastique devant l'extrémité formée d'une ou de plusieurs aiguilles obturatrices (3) quand ces dernières sont passées en position fermée.

15. Tuyère pour machines de moulage par injection suivant l'une quelconque des revendications 5 à 14 ci-dessus indiquées,
caractérisée par ce que
elle est alimentée de composants de matière plastique ramollis par exactement deux unités de plastification et qu'elle présente pour cette raison exactement deux canaux (9, 12) et deux canaux de guidage (2), les canaux de guidage (2) étant disposés sur un plan de coupe par l'axe longitudinal (A) de l'orifice de tuyère commun (4) de manière à former un V symétrique à cet axe longitudinal, dont l'angle (δ) est inférieur à 40°, et les entrées de tuyère (8) des canaux (9, 12) sont disposées symétriquement à l'axe longitudinal (A) de l'orifice de tuyère commun (4), sur un plan de coupe par ledit axe longitudinal (A) perpendiculaire au premier plan de coupe, tandis que les troncs de canal (9) passent en ligne droite, sous un angle d'inclinaison (ε) d'au maximum ±10°, depuis leurs entrées de tuyère (8) respectives aux points d'embouchure au-dessus de l'ouverture de passage (6), variable au moyen de l'aiguille obturatrice (3), de leurs canaux de guidage (2).
